Europäisches Patentamt

European Patent Office

Office européen des brevets

(11) Publication number: **0 100 231**
**B1**

(12) **EUROPEAN PATENT SPECIFICATION**

(45) Date of publication of patent specification: **26.10.88**

(21) Application number: **83304300.3**

(22) Date of filing: **25.07.83**

(51) Int. Cl.⁴: **E 04 B 1/66,** E 02 D 31/02, B 32 B 7/02

(54) **Preformed barrier.**

(30) Priority: **28.07.82 US 402747**
**28.07.82 US 402748**
**28.07.82 US 402749**
**27.09.82 US 423613**

(43) Date of publication of application:
**08.02.84 Bulletin 84/06**

(45) Publication of the grant of the patent:
**26.10.88 Bulletin 88/43**

(84) Designated Contracting States:
**AT BE CH DE FR GB IT LI LU NL SE**

(56) References cited:
**FR-A-1 459 529**
**GB-A- 644 563**
**GB-A-2 052 387**
**US-A-3 919 443**
**US-A-4 309 855**

(73) Proprietor: **W.R. GRACE & CO.**
**Grace Plaza 1114 Avenue of the Americas**
**New York New York 10036 (US)**

(72) Inventor: **Cogliano, Joseph A.**
**351 Sturtons Lane**
**Pasadena Maryland (US)**

(74) Representative: **Senior, Alan Murray et al**
**J.A. KEMP & CO 14 South Square Gray's Inn**
**London WC1R 5EU (GB)**

Courier Press, Leamington Spa, England.

## Description

The present invention relates to a preformed barrier structure useful in the construction industry.

Barrier protection of structural foundations is conventionally formed by parging the foundation's exterior surface with a waterproofing paint or cement or an asphaltic composition. This must be carefully done to assure that it fully covers the foundation surface. When drainage enhancement is desired, this is normally accomplished by placing drainage tile or pipe at the foundation footing and installing gravel or the like over the tile and against the parged foundation wall during backfill. Formation of such a barrier is labor intensive, requires use of heavy material and, therefore, heavy equipment, and the installation of the gravel tends to chip and break the formed waterproofing membrane.

Further it is recognized that structural foundations formed from poured concrete, cinder block and the like do not offer high insulation and therefore do not protect the interior space from exterior temperature conditions. Where the structural design requires the interior space to be useful for any one of various purposes and to be energy efficient, one requires the application of insulation to the walls in addition to waterproofing and drainage.

The roof or upper decking of a structure also requires waterproofing and other protection. Built up roofing has been employed for many years wherein a roof deck supports a membrane which prevents penetration of moisture. Such water impermeable membranes have been formed from conventional asphaltic and bituminous compositions, laminates of the asphaltic or bituminous material with fibrous products, such as roofing felt or from rubberized asphalt, synthetic polymeric compositions or by applying sheet waterproofing membranes such as formed from butyl, neoprene or a polymer film supported rubberised asphalt. Conventional roof structures contain insulation within the structure to aid in maintaining constant and comfortable temperature.

US—A—4 309 855 discloses a barrier as specified in the prior art portion of claim 1. This prior construction, although providing drainage facilities, is not a self-contained unit which can readily be applied to the subterranean structure in that adhesive has separately to be provided for securing the board in position and, furthermore, there is no disclosure of the impermeable sheet as used in this prior construction as being intended for insulation purposes.

The present invention is directed at providing a more readily applied barrier which is characterised as specified in claim 1. While UK—A—2 052 387 discloses a laminate of a thermal insulating board, with a waterproofing membrane on one side, there is no suggestion of this membrane being self-adhesive so as to provide a readily mountable barrier with the adhesive layer providing both a waterproofing and an adhesive function. Indeed, in UK—A—2 052 387, there is disclosed the need for a second membrane which is self-adhesive but is located on the other side of the board so that a exteriorly waterproofed and insulating arrangement is provided, rather than the arrangement of the present invention where the waterproofing layer is directly adhered to the structure where it is protected from the surrounding ground and with the insulating and drainage layer being provided exteriorly thereof where it can provide the best drainage function.

The channels formed in the face of the board remote from the adhesive sheet assist water disposal and run-off. The porous board can have closed pores, making its insulation very effective. Alternatively, the board may have open interconnected pores which enhances drainage. The structure is unitary and easy to apply. Because of its unitary structure, it can be applied with minimum labour and time. The adhesive sheet may include reinforcement. The layer of cloth or mat provided to cover the side of the porous board remote from the adhesive sheet is particularly useful for its open-pore embodiments, to help to ensure that such pores do not become clogged up.

In order that the invention may be more clearly understood, the following description is given by way of example only, with reference to the accompanying drawings, in which:

Figures 1A and 1B are each an oblique, cutaway view of a barrier embodying the invention;

Figure 1C is an oblique view of the barrier with an extended adhesive-butuminous membrane;

Figures 2A, 2B and 2C show possible patterns for the spaced, continuous channels on the surface of the board;

Figure 3 is a cross-sectional view of the barrier of Figure 1B when applied to a structural surface;

Figure 4 is a composite view of two barriers of the invention applied to a vertical structural wall with ancillary drainage means; and

Figure 5 is a cross-sectional view of the barrier of Figure 1C when applied to a structural surface.

In general, the invention provides a barrier having a porous board with a non-porous adhesive sheet or membrane attached to one side which provides moisture proofing of the structural surface and by which the barrier is to be attached to a surface. Embodiments where the pores in the board are generally closed are especially suitable for application to exterior surfaces of subterranean walls to form a waterproofing and insulating barrier. Embodiments where open interconnected pores are provided in the board are specially suited for use as waterproofing and drainage means. The open channels provided at the side of the board remote from the adhesive sheet make the barrier especially suitable for application to the exterior surfaces of subterranean structural walls, such as foundation walls and subterranean formations such as, for example, subway tunnels and stations, and underground parking areas to act as a combination of water barrier, drainage enhancing means and as an insulator from exterior temperature changes. It is generally known that such subterranean structural walls require application of a waterproofing barrier to prevent ground water from permeating the pores of the structural wall (usually formed from concrete and/or cinder block) and eventually entering the interior area of the structure. To prevent a build-up of hydrostatic ground water pressure against the walls which causes ground water permeating and passing through the structural walls, drainage means, such as gravel or other porous materials, is conventionally placed adjacent to the walls. Finally, many subterranean structures are required to be maintained within prescribed temperature ranges. Thus insulation of the walls of the structure is required.

The barrier structure (2) comprises a porous, substantially planar board member (2) having one of its major surfaces covered with an adhesive sheet adhesive bituminous sheet (7). The porous board is generally rigid and is substantially planar and sheet-like. by the term "rigid" we mean that the board has only a limited amount of flexibility and may be bent to a small degree by the application of force, the specific amount of flexure depending upon the dimensions of the structure, but it will be capable of retaining its planar configuration with respect to its major faces. A planar configuration for the porous board will permit the barrier to be placed on and secured to planar structural members, such as foundation walls. However, in certain instances, it may be desired to have the porous board in a predetermined nonplanar configuration which conforms to the configuration of the structural surface to which it will be ultimately applied.

The porous board (2) can be formed from any generally rigid open or closed cellular material. Closed cellular materials have discrete pores throughout the board. This type of board is water impermeable and, due to the closed pores, forms a very effective insulation material. Closed cellular boards can be formed from such materials as styrene polymer foams, styrene-acrylonitrile copolymer foams, styrene methylmethacrylate copolymer foams, polyethylene foams, polyurethane foams, asphaltic compositions, such as polymer (as, for example, styrene, ethylene-acrylate copolymer, ethylene-vinyl acetate, and the like), modified asphaltic foams and the like, and foamed glass.

The closed cell structure is conventionally formed by supporting the material in its plastic state by external pressure during the formation of the gas bubbles and until the material becomes sufficiently rigid to retain the gas in the cell formed. Such structures can also be conventionally formed by extrusion of a polymeric material containing a blowing agent, such as a fluorinated hydrocarbon or a lower alkane. Upon egress from the extruder the material expands due to decompression and the vaporized blowing agent is entrapped in the solidified product.

Open ceullular materials have cells which are interconnected to define tortuous paths from surface to surface. Such open cellular materials are cellular polymeric foams including those formed from polystyrene foams having interconnecting voids, urea-formaldehyde, phenol-formaldehyde, and polyurethane. Porous board of an open cellular configuration can also be formed from random fibrous batting such as rigid fiberglass batting or from polymer modified asphalt foams.

The porous board has a first and a second major surface and edges. The porous board may be of any desired shape. It is preferred for the shape of the board to be a quadrilateral, preferably a parallelogram, and more preferably a rectangle or square. Boards, and thereby barriers, of any convenient dimensions for the construction industry or for particular applications can be formed, such as boards which are from about 1 to 6 feet (30 cms to 2 m), preferably 2 to 4 feet (60 cms to 120 cms) wide and from 1 to 12 feet (30 cms to 4 m) preferably 2 to 10 feet (60 cms to 3 m) long. The thickness of the board can vary from about 0.25 to 10 inches (0.6 to 25 cms) preferably from about 0.5 to 4 inches (1.2 to 10 cms). The barrier, being normally formed of light materials, can be of large dimensions to cover, in one step, a large expanse of structural surface.

There is attached to the second major surface which is opposite the adhesive layer a fibrous cloth or mat (11) formed from woven or non-woven organic or inorganic natural or synthetic fibres. The cloth or mat should have a porosity smaller than that of the porous board and sufficient to inhibit intrusion of dirt and gravel particles into the pores of the barrier's board. The mat or cloth can be adhered to the board in known manner, as by heat bonding or thermoplastic materials (where appropriate) or by aid of a mastic.

The porous board, whether open cell or closed cell, is secured adhered to a preformed adhesive non-porous bituminous sheet material (7) to form the barrier of the present invention. This barrier forms a water drainage enhancer/waterproofing barrier which can be readily applied to structural surfaces such as foundation walls and exterior walls to provide a one step installation and waterproofing means.

Thus, the preformed non-porous adhesive sheet (7) for fulfilling both waterproofing and anchoring functions is directly adhered to the porous board (2). The adhesive sheet (7) is an adhesive butuminous membrane that can be formed from any bituminous material which has adhesive properties at least with respect to each of its major surfaces. The terms "bituminous" and "bituminous composition" mean compositions formed from a bitumen, asphalt, tar or pitch base. Sheet products which have adhesive properties are known and are formed from blends of butuminous material and a natural or/and synthetic rubber or resin. These blends can be formed with a natural or synthetic rubber which is virgin or reclaimed to provide a smooth mix. The synthetic rubber can be, for example, styrenebutadiene rubber (SBR), acrylonitrile-butadiene rubber (NBR), chloroprene rubber (CR), isoprene rubber (IR), butyl rubber (IIR), and the like. The ratio by weight of butuminous material to rubber is generally from about 80:20 up to about 95:5 and preferably from about 85:15 to 95:5. Generally, suitable compositions have a softening point (Ring and Ball method) of 60° to 140°C and preferably 60° to 110°C and a penetration value of 50 to 400, preferably 150 to 300 at 25°C (100 g. 5 sec. — I.P. method).

The preformed adhesive sheet material suitable for use in the present invention can have a laminate structure formed from a multiple of layers provided that the laminae forming each of the major surfaces of the sheet product is formed of an adhesive composition. Further, the adhesive bituminous sheet formed from a single or multiple layers, as described above, can have embedded therein a web or cloth formed from a woven or non-woven organic or inorganic, natural or synthetic fibers (staple or continuous filament) such as glass, hessian, cotton, or synthetic polymers, polyolefins, polyamides, polyesters (polyethylene terephthalate), polyurethane and the like. The web or fibrous cloth should be of a thickness not greater than about half, preferably less than one quarter the thickness of the bituminous sheet material (7).

The bituminous sheet has two major surfaces and edges which define its dimensions. The sheet should be at least 0.01 inch (0.025 cm) thick, preferably 0.025 to 0.2 inch (0.063 to 0.5 cm). The thicker the bituminous sheet the better the waterproofing effect but, in general, a sheet of from 0.025 to 0.15 inch (0.063 to 0.4 cm) thick is satisfactory for most application.

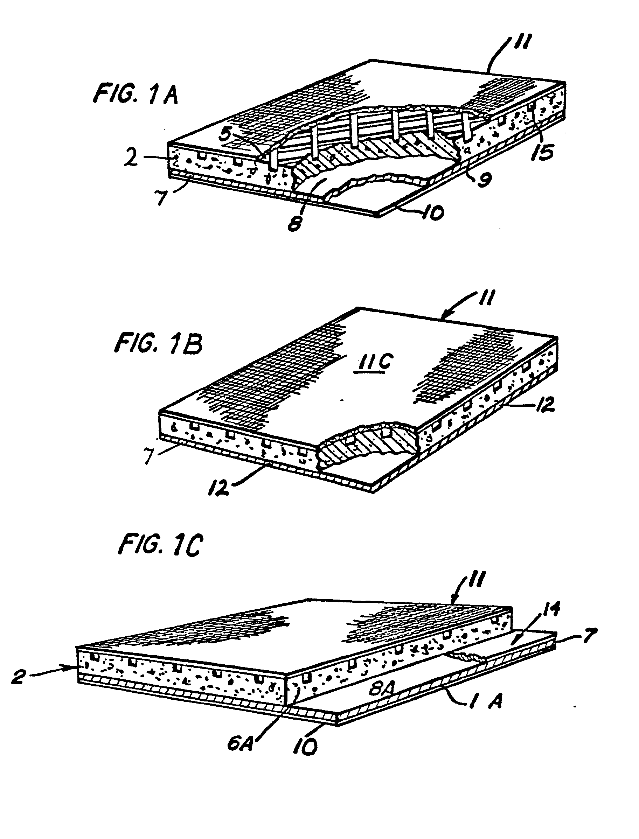

As shown in Figure 1A, the sheet's first major surface (8) is superimposed on and at least coextensive with the first major surface of the porous board (2). The sheet (7) is in direct contact with the porous board (2) and the adhesive properties of the first major surface (8) of the sheet causes the composite to be a unitary structure.

The barrier can be stored, transported and sold with a protective sheet coating (10) coextensive and congruent with the second major surface (9) of its adhesive bituminous sheet to aid in handling. This surface will, upon removal of the protective coating at the construction site, be applied to the structural surface to be sealed. The protective coating (10) is in the form of a sheet product such as siliconized paper, cloth, polymer film or the like sheet product treated with a release agent so that it is substantially non-adherent with respect to the adhesive sheet's second major surface (9) ("substantially non-adherent" means herein and in the appended claims to be readily removable from the adhesive sheet's second major surface without causing damage). The release agent used in conjunction with the coating sheet can be any commercial release agent such as a dispersion of a silicon compound, for example, a dispersion of poly-(dimethyl siloxane).

Alternately, as shown in Figure 1B the subject barrier can be stored, transported and sold with a coating (11C) of a film of a release agent directly applied such as by spraying, brushing or the like to the fibrous cloth (11) which is adhered to the second major surface which is applied to aid in inhibiting plugging of the pores by foreign matter. The film can be very thin and normally need not be greater than about 5 mils thick. Greater thickness may be applied but normally does not add to the non-adherent properties. The second major surface of the adhesive sheet is thus free for ready application to the construction surface. The release agent can, as above, be any conventional release agent capable of rendering the surface substantially non-adherent with respect to the adhesive sheet's second major surface, such as a dispersion of a silicon compound, as for example, a dispersion of poly(dimethyl siloxane) or the like. When the subject barrier is treated with release agent (11C) on the fibrous coating, the barrier can be stored, transported and sold without problem by stacking the barriers so that the adhesive bituminous sheet of one barrier is coextensive and congruent with the release coating on the porous board free surface of another barrier which in turn is coextensive and congruent to still another barrier in the same manner. The bottom element of the stack should be a release coating treated board or the like without a membrane. The protective coating (11C) is an integral part of the barrier and need not be removed and disposed of at the construction site. The barriers can be each removed from the storage stack and directly applied to the structural surface to be sealed.

The adhesive bituminous sheet (7) has dimensions of length and breadth defined by its edges (12). The sheet may be of a dimension such that it is coextensive and congruent with that of porous board (2) with which it forms a composite barrier as shown in Figure 1B.

Figure 1C, illustrates a variation wherein the sheet has dimensions such that it covers all of one surface of the porous board and extends, with respect to at least two edges, beyond that of the coordinate (spacially close and substantially parallel) edges of the porous board. In this manner the sheet shall have an overhang with respect to at least two edges and thus provide a means for overlapping at the junctures of the applied barriers over the entire expanse of the structural surface. The two extended edges of the sheet of any one barrier board can be adjacent edges, that is edges which meet at one corner area of the barrier. Alternatively, the extended edges can be parallel to each other (for example, on opposite sides of a quadrilateral parallelogram) or the sheet edges can extend on all sides with respect to the porous board of the barrier.

The extended portions of a bituminous sheet of any one barrier will have the associated extended portion (8A) of its first major surface exposed. The aid in handling during storage, transportation, etc. this exposed portion (8a) of the first major surface should be covered with a coating sheet (14) similar to that described above with respect to the coating sheet (10) for the membrane's second major surface. The coating (14) should be treated with a release agent, as described above, to permit its ready removal. This release agent should, preferably, impart non-adherent properties to a lesser degree in comparison to that used on the protective coating for the membrane's second major surface. Such agent could be, for example, a modified poly(dimethyl siloxane) having a fraction of the methyl groups replaced by hydrogen, a higher alkyl or a phenyl group.

When the barrier is supplied with a protective coating (11C) and the barrier is of a configuration having extended portions (8A) of its bituminous sheet, the protective coating should also cover the edge surfaces of the board and should be on both surfaces of the coating sheet (14) which covers the exposed portion (8A) of the first major surface of the adhesive bituminous sheet. In this manner the extended portion of the bituminous sheet can drape downwards over the edge surface and even (depending on its dimensions) the protected surface of extended bituminous sheets of lower barriers in a stack of barriers during storage, etc. The extended free surface of butuminous sheet component of any one barrier will only be in contact with a protective coating (i.e. a release agent coating) providing protection during storage, transportation, etc., providing ready separation and removal of any one barrier from the storage stack and providing ready application without requiring removal and disposal of large quantities of protective sheet product.

The adhesive bituminous sheet of the barrier can extend beyond the porous board for about 1 to about 10 inches (2.5 to 25 cms) or more, preferably from 2 to 8 inches (5 to 20 cms) to permit overlapping with a sheet of the next applied barrier and to permit extended adhesive to adhesive contact to assure forming a secure watertight seal.

The application of the subject barrier can be readily done without the need for extensive labour or the use of extensive equipment and material as is normally required in applying a composite roof or wall structure.

Figures 1a, and 1B and 1C illustrate the barrier of the invention in which the porous board component has spaced continuous channels (15) on its surface 5. It is preferred that the cellular structure (3) be of a closed cellular configuration to provide a barrier suitable to provide a combination of waterproofing, insulation and drainage means.

The second major surface (5) of porous board (2) has spaced, open, continuous channels (15) embedded therein. The channels can form any pattern provided that there is at least one open continuous channel path from any point of any one channel which is provided for by the single channel or through a route formed by a combination of channels which terminates at each of at least two opposite edges of the porous board (2). Such barriers should be applied to the structural surface so that one of the edges at which the majority of the open channel terminate is orientated at the lowest part of the barrier. It is preferred that there are open continuous channel paths from any point of any one channel which terminates at each of the edges of the porous board. With this preferred mode, the barrier can be applied to structural walls in any orientation (sideways or up and down) and readily present an open continuous downwards path by which water can be readily removed. The channels (15) may be a series of parallel spaced channels orientated at a diagonal with respect to the edges of the porous board and a second series of parallel spaced channels oriented at a diagonal with respect to the edges of porous board and also oriented at substantially right angle to the first series of channels. The channels thus form a criss-cross pattern permitting one to follow a path from any point of each channel to each of the four edges. Alternately, each series of channels can be oriented substantially parallel to at least one edge of the porous board. Other patterns can be used. The main criteria with respect to channel pattern and configuration is that there be at least one open, continuous channel path from that channel point to the bottom or lowest edge of the porous board when its barrier is applied to a structural wall.

The term "open" as used in the present specification and appended claims when referring to channel configuration means that each channel opens out along its whole length onto one major surface of the porous board thus providing a groove in the major surface. The term "continuous" as used in the present specification and appended claims means a continuous, non-segmented channel from one end to the other capable of having a continuous path to provide a descending egress means (alone or in combination with other channels) when the barrier is in a vertical use position.

The channels shall be spaced from each other over the majority of the major surface upon which they open to thus provide a porous body of maximum thickness over the major portion of the structural surface to which the barrier is applied. The ratio of the channel depth to thickness of the porous board should be such as to (a) provide a ready egress means for water entering the channel under contemplated use conditions and (b) retain sufficient porous board beneath each channel to sustain board strength. The ratio is normally from about 0.1 to 0.75 with from 0.25 to 0.6 being preferred. Normally, thicker boards can accommodate higher channel depth to board thickness ratios. The width of each channel can be from about 0.5 to 5 times its depth though higher or lower values can be used.

Channels of a depth greater than normally tolerable with respect to such porous boards can be formed in boards used in the subject barrier. Although each channel forms a line of weakness with respect to the boards flexural strength, such weakness is overcome and the strength enhanced by the overall laminate structure of the barrier. Further, once applied to a structural wall the barrier has enhanced strength even under great loads and the channels permit the subject barrier to conform to any small curvatures or irregularities in the surface of the structural wall to which it is applied.

Figure 1A is a cut-away perspective view of the subject barrier in which the second major surface (5) and its open channels (15) are covered with a fibrous cloth or mat coating (11). The coating (11) is formed from woven or non-woven organic or inorganic natural or synthetic fibers. The fibers can be formed from any one of the materials described above with respect to the mat embedded in the sheet and as described above for fibrous coating. The cloth or mat should preferably have a porosity sufficiently small, such as equivalent to about 50 U.S. Standard Mesh or smaller, to inhibit intrusion of dirt and gravel particles into the channels (15) of the barrier's board (2). The mat or cloth can be adhered to the board in known manner, as by heat bonding of thermoplastic materials (where appropriate) or by aid of a mastic.

The barrier is thus a unitary structure in which the porous board's first major surface is in contact and adhered to the first major surface (8) of the preformed adhesive sheet and the porous board's second major surface is in contact and adhered to the woven or non-woven fibrous coating (11). The release sheet (10) is shown provided on the outer adhesive surface of the adhesive sheet (9).

Figure 1B depicts the subject barrier in a preferred mode with a fibrous cloth (11) adhered to the second major surface (5) of the board with a coating (11C) thereon of a non-adherent composition with respect to the adhesive sheet (7) such as of a release agent as described above. The coating (11C) is a film of release agent containing composition applied directly to (11) by conventional application such as by spraying, brushing or the like. When the fibrous cloth (11) has porosity which exposes a portion of surface (5), the coating (11C), as applied, is a film over the combination of (5) and (11).

The adhesive bituminous sheet (7) may be of a dimension such that it is coextensive and congruent with that of the porous board (2) with which it forms a composite barrier as shown in Figure 1A. The sheet (7) may have dimensions such that it extends beyond at least one of the edges of porous board (2) similar to that described hereinabove. It is preferred, when using the barrier of this second embodiment as a drainage means on subterranean structural walls to have an extended edge 8A on only one side, which corresponds to the length of (longer side) the barrier. In this manner the sheet shall have an overhang with respect to at least one edge and thus provide a means for overlapping at the junctures of the applied barriers over the entire expanse of the structural surface. The extending edge 8A of sheet 7 should preferably be with respect to the longer or major edge of the barrier. Normally, the barrier will have a length sufficient to cover the entire height of the structural surface. Placement of the barrier of Figure 1C onto a structural surface with the extended sheet vertically orientated permits overlapping of the adhesive sheet with the adhesive sheet of the adjacent barrier to insure waterproof seams.

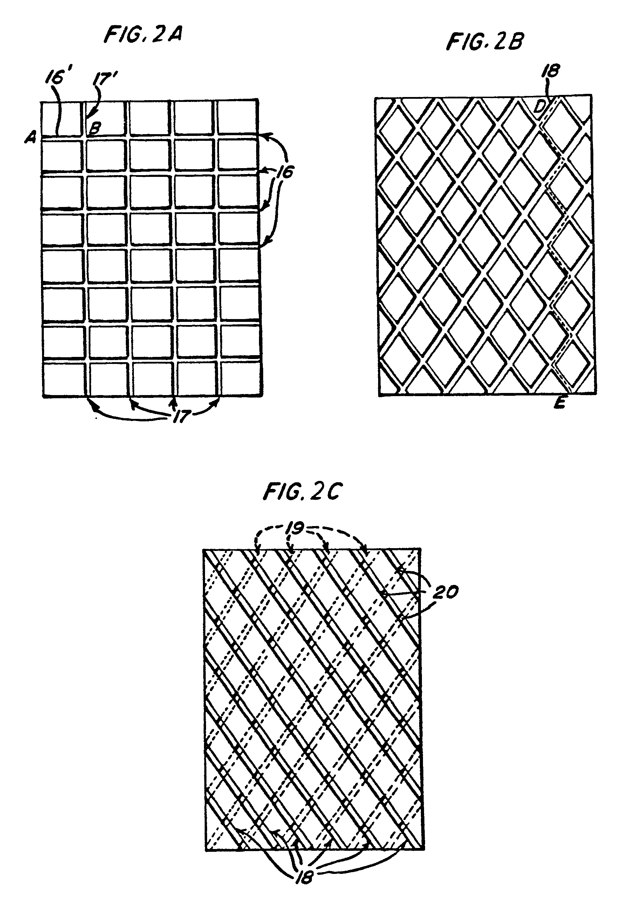

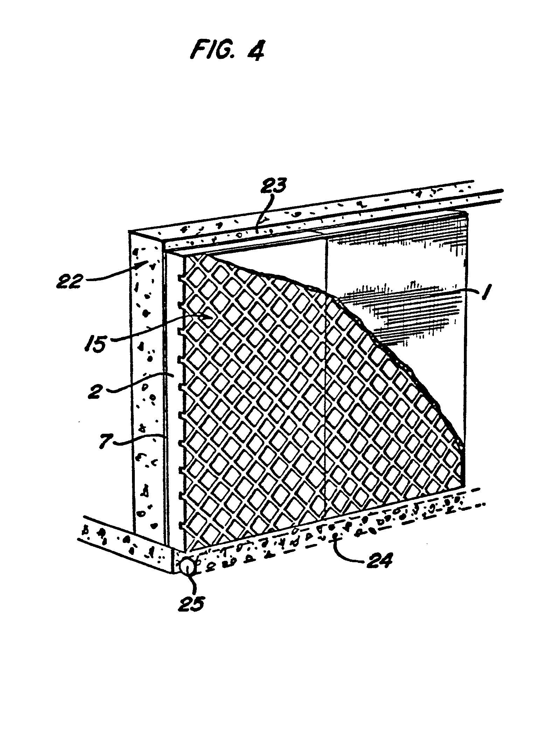

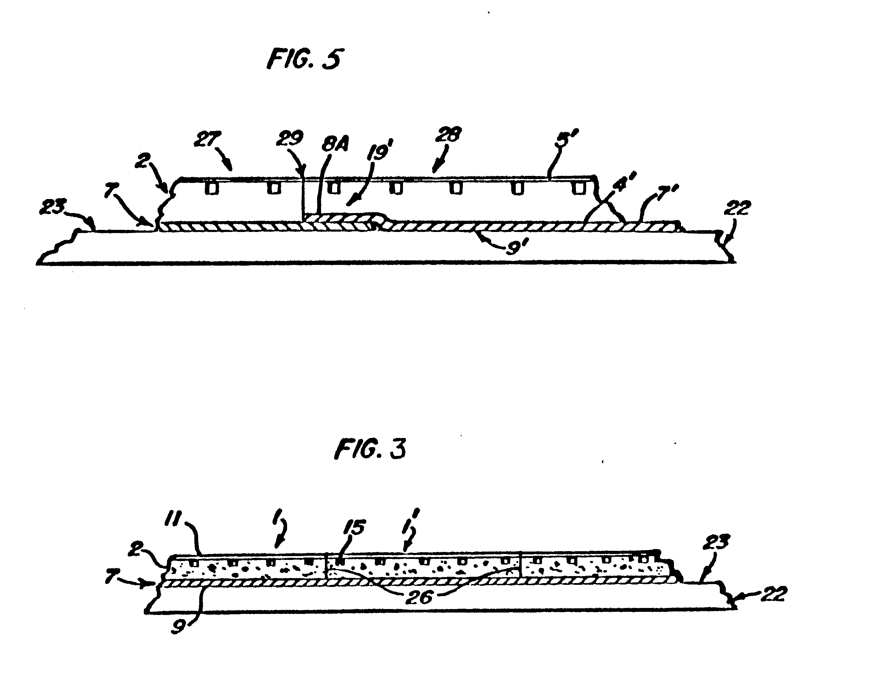

Figures 2A, 2B and 2C show some of the various alternative patterns which channels (10) can form on the surface of the porous board. Each of the channel patterns forms an open, continuous channel network to present a ready downward egress means for carrying liquid (water) away from the structural surface. Figure 2A illustrates a channel pattern formed by two sets of spaced channels (a set of horizontal spaced channels (16) and a set of vertical spaced channels (17) which are orientated perpendicular to each other and each set is substantially parallel to a pair of opposite edges of the porous board. It is readily seen that one can locate a continuous channel egress from substantially any part of each channel to the bottom of the board. For example, from point A of channel 16' one could trace a horizontal path to point B at the conjunction of channels 16' and 17' and then a vertical path to point C. Figure 1B illustrates a channel pattern formed by two sets of spaced channels, each set being perpendicular to the other and diagonal with respect to the vertical edges of the porous board. Here again one can trace a continuous channel egress path from substantially any part of each channel to the bottom of the board. For example, from point D of channel 18 one can form a path (shown by dash lines) among several of the channels of the two sets of channels to arrive at the bottom egress point E. The diagonal pattern permits the liquid to cascade downward and away from the barrier and structural surface it protects and, therefore, is a preferred configuration. Figure 5C is of a similar channel pattern to that of Figure 5B except that one diagonal set of channels (18) is located on and open to one major surface of board (2) and the other diagonal set of channels (19) is located on and open to the second major surface of board (2). When channels are located on opposite sides of board (2) the channels should be of a depth of greater than half, preferably from 0.51 to 0.75, the thickness of board (2) and be of a pattern such that each channel on the board's first surface crosses over at least one channel on the board's second surface to thus form an opening (20) between channels 18 and 19 at the points where the channels cross. Such a pattern permits the formation of more channels per board without detracting from the strength of the composite barrier.

Referring to Figure 3, when the barrier is supplied in the form of a bituminous sheet and porous board which are coextensive it is applied to the surface (23) of the structure to be protected after removing the protective coating (10). In the same manner the protective coating on the sheet of another barrier (1') is removed to expose its adhesive sheet, and this barrier is positioned and applied to the structural surface adjacent the previously applied barrier. The steps are repeated until the entire surface is covered. The barriers are placed adjacent to and in contact with previously layed barriers. Such placement of barriers formed causes each of the edge surfaces (12) to butt up against an adjacent edge surface (12). Due to the adhesive property of each sheet and the ability to flow to a small degree even under ambient temperatures, the abutting edges will self-adhere, form a water-tight seal and form a unitary waterproofing membrane structure over the entire structural surface to which it is applied.

Referring to Figure 5, the barriers which have two adjacent edges of the sheet extend beyond the porous board can be applied to structural surfaces in a manner to cause overlapped seams. Such barriers are applied in the same manner as described above, followed by removing the protective coating (14) from the extended first major surfaces (8A). One then applied a second barrier (1') to the exposed extended first surface (8A) of the sheet (7) of the first barrier (1) and to the adjacent structural surface so that the porous boards of the first and second barriers are adjacent to and in contact with each other at seam 18, and so that the sheet (7') of the second barrier (1') is adjacent to the porous board (2) of the first barrier (1) at seam (26). The sheets of the first and second barriers will thereby overlap. The protective coating of the extended portion of the first surface of the second barrier's sheet component is removed. The process is repeated until the surface of the structure to be protected is covered. This provides overlap seams between each of the applied barrier sheet components with extended adhesive to adhesive contact to assure waterproof seams and form a unitary membrane structure.

The barrier of this embodiment can be applied to form a substantially flat total structure if the porous board of the barrier has edge areas (19') in which it is less thick. In other words, in an area extending for a distance about equal to or greater than the extended sheet width dimension, as from about 1 to 10 inches (2.5 to 25 cms), from any of the porous board's edges not associated with an extended membrane portion, the second major surface (5') of the porous board is substantially planar but the first surface is stepped to be in closer spacial relationship at the edge portion (19') than otherwise. This will form an indenture (preferably about equal to the thickness of a sheet component of the barrier used) to accommodate the overlap of the two sheets.

Figure 4 illustrates a typical application of the barrier of the type illustrated by Figure 1C, to a structural surface, such as a foundation wall (22). The barrier (1) is placed on the exterior surface (23) of wall 22 with the adhesive sheet (7) of the barrier in contact with surface (23). The sheets (7) of all of the applied barriers together form a waterproofing coating to the wall, while the porous boards form an exterior insulation. The exterior surface (adjacent backfill) of the barriers provides, via the grooves (15), drainage and removal of any water forming adjacent to the wall, and prevents buildup of hydrostatic pressure. The water drains to the bottom of the barrier which is in contact with the base of the wall and where a small amount of gravel (24) and drainage pipe (25) is placed in conventional manner to carry water away.

Figures 3 and 5 are cross-sectional views of barriers having channels in the porous body surface as applied to structural surfaces as in Figure 4 with the interior surface being the lower surface of each figure. Referring first to Figure 3, a barrier having a bituminous sheet and porous board which are coextensive as shown in Figure 1A is applied to the surface (23) of the structure (22).

Any water collecting adjacent to the wall (adjacent coating 11) will be removed by the channels 15 to prevent the formation of hydrostatic pressure and associated damage.

Figure 5 is a cross-sectional view of the barrier of Figure 1C, with an additional preferred variation, applied to a surface 23 of structural wall 22. It has the preferred edge region 19' where the porous board has lesser thickness as is described above.

The barrier may have adhesive sheets extending beyond the board edges on opposite sides or on all sides. They can then be positioned so that one of its sheet's extended edges is up to the porous board of the previous barrier and so that there is an overlap seam. The exposed overlap seams can then be covered with filler sections formed from porous board of the same or similar type used to form the barrier. The filler sections should be of a thickness approximately equal to the thickness of the barrier less twice the thickness of the barrier's sheet component. Alternatively, certain filler sections of any one barrier can be supplied as part of a barrier temporarily adhered to half of the extended sheet surfaces. These sections thereby act as a guide to aid in applying the barrier to adjacent barriers of proper spacing. Each filler section can be removed to permit rolling of the overlap adhesive sheets to ensure forming of a watertight seal therebetween and then replaced in the vacant space. The temporary adhesion of each filler section to the extended sheet can be done by applying a release film to the surface of the filler section initially in contact with the adhesive membrane and then reapplying the filler section with the release film treated surface away from the sheet membrane. Other methods can be readily determined. The resultant structure will thereby be substantially flat.

**Claims**

1. A barrier, suitable to be positioned on at least a portion of the exterior surface (23) of a subterranean structure (22), the barrier being water impermeable and comprising a porous board (2) having one surface (9) suitable to be adhesively secured to the exterior surface (23) of the structure and the opposite surface provided with spaced continuous open channels (15) therein and a water permeable coating (11) thereon covering said channels, characterised in that the board (2) is provided with an adhesive bituminous sheet (7) of at least 0.025 cm thickness as said one surface, and in that the water permeable coating (11) is a fibrous cloth or mat.

2. A barrier according to claim 1, characterised by channels (15) on both sides of the porous board (2).

3. A barrier according to claim 1 or 2, characterised in that the ratio of the depth of the channels (15) to the thickness of the porous board (2) is 0.1 to 0.75 and each channel width is 0.5 to 5 times its depth.

4. A barrier according to claim 1, 2 or 3, characterised in that the pores in the board (2) are closed pores (3).

5. A barrier according to claim 4, characterised in that the closed cell porous board (2) is formed from a composition of polystyrene, polyurethane, polyethylene or a polymer modified asphalt.

6. A barrier according to any one of claims 1 to 3, characterised in that the porous board (2) is formed of urea formaldehyde foam, polyurethane foam, a random fibrous batting or a polymer modified asphalt foam.

7. A barrier according to any one of claims 1 to 3 or claim 6, characterised in that the pores in the board (2) are open interconnected pores.

8. A barrier according to any preceding claim characterised in that the adhesive sheet (7) extends at least at one side (13) of the barrier beyond the edge of the rigid board.

9. A barrier according to claim 8, characterised in that, at edges of the board opposite those edges at which the adhesive sheet extends beyond the board, the board is of reduced thickness at an edge area (19'), while having a planar face opposite the face on which the adhesive sheet is applied, so as to allow provision of a smooth surface when a plurality of boards are laid adjacent one another with the extension of the adhesive sheet of one board underlying the next board.

10. A barrier according to any preceding claim, characterised by reinforcement in the adhesive sheet.

11. A barrier according to any preceding claim, characterised in that a protective coating (10) is provided on said adhesive sheet (7).

12. A subterranean structure having a barrier according to any preceding claim positioned on its exterior surface with the adhesive sheet adjacent said surface.

**Patentansprüche**

1. Wasserundurchlässiges Sperrelement zur Anordnung auf mindestens einem Teil der äußeren Oberfläche (23) eines unter der Erdoberfläche liegenden Bauwerkes (22) in Form einer porösen Platte (2), die an der äußeren Oberfläche (23) des Bauwerks mittels einer haftenden Oberfläche (9) befestigbar ist, wobei die gegenüberliegende Oberfläche mit darin in Abständen angeordneten, fortlaufenden offenen Kanälen (15) und mit einer die Kanäle abdeckenden wasserdurchlässigen Beschichtung (11) versehen ist, dadurch gekennzeichnet, daß die Platte (2) als eine Oberfläche eine bituminöse Klebfolie (7) mit einer Dicke von mindestens 0,025 cm aufweist, und daß die wasserdurchlässige Beschichtung (11) ein faserförmiges Gewebe oder eine faserförmige Matte ist.

2. Sperrelement nach Anspruch 1, gekennzeichnet durch Kanäle (15) auf beiden Seiten der porösen Platte (2).

3. Sperrelement nach Anspruch 1 oder 2, dadurch gekennzeichnet, daß das Verhältnis der Tiefe der Kanäle (15) zu der Dicke der porösen Platte (2) 0,1 bis 0,75 beträgt und die Breite jedes Kanals seiner 0,5- bis 5-fachen Tiefe entspricht.

4. Sperrelement nach einem der Ansprüche 1, 2 oder 3, dadurch gekennzeichnet, daß die Poren in der Platte (2) geschlossene Poren (3) sind.

5. Sperrelement nach Anspruch 4, dadurch gekennzeichnet, daß die poröse Platte (2) mit geschlossener Zellstruktur aus einer Zusammensetzung aus Polystyrol, Polyurethan, Polyethylen oder einem mit einem Polymer modifizierten Asphalt gebildet wird.

6. Sperrelement nach einem der Ansprüche 1 bis 3, dadurch gekennzeichnet, daß die poröse Platte (2) aus Harnstoff-Formaldehyd-Schaum, Polyurethan-Schaum, einer Faservlies-Watte oder einem mit einem Polymer modifizierten Asphalt-Schaum gebildet wird.

7. Sperrelement nach einem der Ansprüche 1 bis 3 oder Anspruch 6, dadurch gekennzeichnet, daß die Poren in der Platte (2) offene, miteinander verbundene Poren sind.

8. Sperrelement nach einem der vorangehenden Ansprüche, dadurch gekennzeichnet, daß sich die Klebfolie (7) zuminderst an einer Seite (13) des Sperrelements über die Kante der starren Platte hinaus erstreckt.

9. Sperrelement nach Anspruch 8, dadurch gekennzeichnet, daß die Platte einen Kantenbereich (19') von reduzierter Dicke an den Kanten aufweist, welche den Kanten gegenüberliegen, an welchen die Klebfolie über die Platte hinausragt, und daß die Platte eine ebene Oberfläche auf der Seite hat, die von der mit der Klebfolie versehenen Seite abgewandt ist, so daß eine glatte Oberfläche erhalten wird, wenn eine Mehrzahl von Platten aneinanderstoßend mit der überstehenden Klebfolie einer Platte unter der nächsten Platte liegend verlegt wird.

10. Sperrelement nach einem der vorangehenden Ansprüche, gekennzeichnet durch eine Verstärkung in der Klebfolie.

11. Sperrelement nach einem der vorangehenden Ansprüche, dadurch gekennzeichnet, daß ein schützender Überzug (10) auf der Klebfolie (7) vorgesehen ist.

12. Unterirdisches Bauwerk, welches ein auf seiner äußeren Oberfläche angeordnetes Sperrelement nach einem der vorangehenden Ansprüche aufweist, wobei die Klebfolie an die Oberfläche angrenzt.

## Revendications

1. Barrière, appropriée à être placée sur au moins une portion de la surface extérieure (23) d'une structure souterraine (22), la barrière étant imperméable à l'eau et comprenant un panneau poreux (2) ayant une surface (9) appropriée pour être fixée de manière adhésive à la surface extérieure (23) de la structure et sa surface opposée pourvue de canaux ouverts continus espacés (15) et un revêtement (11) perméable à l'eau pardessus couvrant lesdits canaux, caractérisée en ce que le panneau (2) est pourvu d'une feuille bitumineuse adhésive (7) d'au moins 0,025 cm d'épaisseur en tant que ladite surface, et en ce que le revêtement (1) perméable à l'eau est un tissu fibreux ou matelas.

2. Barrière selon la revendication 1, caractérisée par des canaux (15) des deux côtés du panneau poreux (2).

3. Barrière selon la revendication 1 ou 2, caractérisée en ce que le rapport de la profondeur des canaux (15) à l'épaisseur du panneau poreux (2) est de 0,1 à 0,75 et chaque largeur de canal est de 0,5 à 5 fois sa profondeur.

4. Barrière selon la revendication 1, 2 ou 3, caractérisée en ce que les pores du panneau (2) sont des pores fermés (3).

5. Barrière selon la revendication 4, caractérisée en ce que le panneau poreux à cellules fermées (2) est formé d'une composition de polystyrène, polyuréthane, polyéthylène ou d'asphalte modifié par un polymère.

6. Barrière selon l'une quelconque des revendications 1 à 3, caractérisée en ce que le panneau poreux (2) est formé de mousse d'urée formaldéhyde, mousse de polyuréthane, d'une ouate en feuille fibreuse statistique ou d'une mousse d'asphalte modifié par un polymère.

7. Barrière selon l'une quelconque des revendications 1 à 3 ou la revendication 6, caractérisée en ce que les pores du panneau (2) sont des pores interconnectés ouverts.

8. Barrière selon l'une quelconque des revendications précédentes, caractérisée en ce que la feuille adhésive (7) s'étend au moins d'un côté (13) de la barrière au delà du bord du panneau rigide.

9. Barrière selon la revendication 8, caractérisée en ce qu'aux bords du panneau, opposés aux bords auxquels la feuille adhésive s'étend au delà du panneau, la panneau est d'épaisseur réduite à une zone de bordure (19'), tout en ayant une face plane opposée à la face sur laquelle est appliquée la feuille adhésive, afin de permettre de prévoir une surface lisse lorsqu'un certain nombre de panneaux sont placés adjacents les uns aux autres avec l'extension de la feuille adhésive d'un panneau en dessous du panneau suivant.

10. Barrière selon l'une quelconque des revendications précédentes, caractérisée par un renforcement dans la feuille adhésive.

11. Barrière selon l'une quelconque des revendications précédentes, caractérisée en ce qu'un revêtement protecteur (10) est prévu sur ladite feuille adhésive (7).

12. Structure souterraine ayant une barrière selon l'une quelconque des revendications précédentes placée sur sa surface extérieure avec la feuille adhésive adjacente à ladite surface.

*FIG. 1A*

*FIG. 1B*

*FIG. 1C*

1

FIG. 2A

FIG. 2B

FIG. 2C

## FIG. 4

FIG. 5

FIG. 3